# DEMANDE DE BREVET EUROPEEN

(11) **EP 4 260 771 A1**
(43) Date de publication de la demande: **18.10.2023**
(21) Numéro de dépôt: 23166376.6
(22) Date de dépôt: 03.04.2023
(51) Int. Cl.: A47J 36/32

(54) **PROCÉDÉ DE DÉTERMINATION D'AU MOINS UN PARAMÈTRE DE CUISSON D'UN APPAREIL DE CUISSON À PARTIR D'UNE PLURALITÉ D'IMAGES**

(30) Priorité: 13.04.2022 FR 2203396
(71) Demandeur: SEB S.A., 69130 Ecully (FR)
(72) Inventeur: FORNECKER, Florent, 69134 Ecully Cedex (FR); GHECHOUA, Karim, 69134 Ecully Cedex (FR)
(74) Mandataire: Germain Maureau

(57) **Abrégé**

Procédé de détermination d'un plan de cuisson pour un appareil de cuisson (5), comprenant :
- Une étape d'acquisition (7) dans laquelle une pluralité d'images (8) d'un aliment à cuire (2) sont réalisées sous une pluralité d'angles de prises de vue au moyen d'un dispositif d'assistance (4), ledit dispositif d'assistance (4) comprenant au moins un capteur de prise d'image;
- Une étape de caractérisation dans laquelle un type d'aliment à cuire (2) est déterminé ;
caractérisé en ce que l'étape de caractérisation détermine automatiquement à partir de la pluralité d'image (8) une géométrie dimensionnelle de l'aliment à cuire (2) et en ce que le procédé comprend en outre une étape de détermination dans laquelle un algorithme de cuisson prédéterminé détermine un plan de cuisson comprenant au moins une durée de cuisson.

## Description

L'invention concerne le domaine des appareils de cuisson et plus particulièrement un procédé de détermination d'un plan de cuisson pour un appareil de cuisson.

Un aliment désigne une substance comestible qui est caractérisée par son type qui regroupe notamment une matière, une forme, une mise en oeuvre et éventuellement un état, comme par exemple une entrecôte de boeuf, un steak de boeuf, une saucisse, un steak frais ou surgelé ou un oignon.

L'aliment est également caractérisé par une géométrie dimensionnelle. Plus précisément, la géométrie dimensionnelle d'un aliment correspond aux dimensions de sa forme, et peut se caractériser notamment par sa longueur, sa largeur, son épaisseur, sa superficie et/ou son diamètre.

L'aliment peut également être cuit à différents niveaux de cuisson. Dans la présente description, la cuisson consiste en un chauffage de l'aliment pendant un temps déterminé. Le niveau de cuisson peut aller de peu cuit à très cuit.

Enfin, l'aliment a une texture. La texture d'un aliment correspond à une qualité physique de l'aliment. Cette texture peut comprendre un marquage de l'aliment, c'est-à-dire une intensité des marques laissées sur la surface de l'aliment au cours d'un contact de l'aliment avec un appareil de cuisson par exemple des grilles de cuisson, mais cette texture peut également comprendre une dorure, une densité, une viscosité, ou une homogénéité. Ainsi, un même aliment peut avoir pour un même niveau de cuisson, plusieurs textures. Par exemple, l'entrecôte de boeuf peut être peu cuite avec un marquage important ou faible, c'est-à-dire qu'elle peut être très grillée ou peu grillée.

Un utilisateur désireux de manger un aliment suivant un niveau de cuisson souhaité et une texture souhaitée, après préchauffage de l'appareil de cuisson, positionnera l'aliment au contact de l'appareil de cuisson, par exemple un grill électrique ou un barbecue électrique, et règlera une température de cuisson. Après un certain temps, appelé durée de cuisson, que l'utilisateur devra estimer sur la base de son expérience ou bien qui sera déterminé par l'appareil de cuisson, l'utilisateur retire l'aliment. Dans le cas d'un barbecue électrique, un retournement de l'aliment est nécessaire pour cuire l'aliment sur ces deux faces et l'utilisateur, toujours sur la base de son expérience, devra estimer le moment de retournement opportun pour obtenir une cuisson homogène sur les deux faces de l'aliment. La température de cuisson et la durée de cuisson, appelées par la suite paramètres de cuisson, vont influer sur le niveau de cuisson de l'aliment ainsi que sur sa texture. Cependant, il est courant que le niveau de cuisson et la texture obtenus, c'est-à-dire le résultat obtenu, soient différents du résultat souhaité du fait de l'incapacité à caractériser plus précisément l'aliment à cuire de manière à optimiser les paramètres de cuisson conventionnels tels que la température et la durée de cuisson, et de déterminer des paramètres de cuisson plus spécifiques, tel qu'un moment de retournement de l'aliment dans le cas d'un barbecue électrique.

Pour aider l'utilisateur à déterminer les paramètres de cuisson de sorte à se rapprocher du résultat souhaité, il est connu un procédé tel que décrit dans le document CN111435229. Ce procédé comprend une étape d'acquisition dans laquelle au moins une image d'un aliment à cuire disposé dans un référentiel dimensionnel est réalisée au moyen d'un dispositif de prise d'image externe à l'appareil de cuisson, puis une étape de caractérisation automatique du type d'aliment à cuire et enfin une étape de détermination des paramètres de cuisson.

Ce procédé permet d'obtenir un niveau de cuisson et une texture assez proche du niveau de cuisson souhaité et de la texture souhaitée. Cependant, dans certains cas, le niveau de cuisson obtenu ou la texture obtenue n'est pas satisfaisant pour l'utilisateur.

De plus, l'acquisition de l'image nécessite que l'aliment soit disposé dans un référentiel dimensionnel.

Le but de l'invention est de permettre un accompagnement de l'utilisateur dans la cuisson des aliments afin de garantir que le niveau de cuisson obtenu et la texture obtenue soient plus proches du niveau de cuisson souhaité et de la texture souhaitée.

L'invention a pour but de remédier à tout ou partie des inconvénients précités en proposant un procédé de détermination d'un plan de cuisson pour un appareil de cuisson, comprenant :
- Une étape d'acquisition dans laquelle une pluralité d'images d'un aliment à cuire sont réalisées sous une pluralité d'angles de prises de vue au moyen d'un dispositif d'assistance, ledit dispositif d'assistance comprenant au moins un capteur de prise d'image ;
- Une étape de caractérisation dans laquelle un type d'aliment à cuire est déterminé ;
caractérisé en ce que l'étape de caractérisation détermine automatiquement à partir de la pluralité d'image une géométrie dimensionnelle de l'aliment à cuire et en ce que le procédé comprend en outre une étape de détermination dans laquelle un algorithme de cuisson prédéterminé détermine un plan de cuisson comprenant au moins une durée de cuisson à partir du type et de la géométrie dimensionnelle de l'aliment à cuire déterminés au cours de l'étape de caractérisation.

L'invention s'applique à tout type d'appareil de cuisson comme par exemple un four, un barbecue électrique ou une plancha.

Le dispositif d'assistance est externe à l'appareil de cuisson, c'est-à-dire qu'il n'existe pas de lien physique entre eux. Le dispositif d'assistance peut être déplacé indépendamment de l'appareil de cuisson. Par exemple, le dispositif d'assistance est un smartphone ou une tablette informatique.

Ainsi, un utilisateur du procédé selon l'invention peut s'éloigner de l'appareil de cuisson tout en conservant le dispositif d'assistance à proximité. L'utilisateur est donc libre de ses mouvements. Selon une variante, le dispositif d'assistance est embarqué et fixe dans l'appareil de cuisson. Les différentes images peuvent ainsi être obtenues en déplaçant l'aliment selon plusieurs angles de prises de vue.

Selon une autre variante, le dispositif d'assistance est embarqué et mobile dans l'appareil de cuisson. Les différentes images peuvent ainsi être obtenues en déplaçant l'aliment relativement au dispositif d'assistance ou réciproquement, de manière à obtenir plusieurs angles de prises de vue.

L'étape de caractérisation détermine automatiquement quel est le type et la géométrie dimensionnelle de l'aliment à cuire.

Enfin l'étape de détermination définit le plan de cuisson en mettant en oeuvre l'algorithme de cuisson. L'algorithme de cuisson est déterminé, par exemple, par une loi statistique basée sur une pluralité de plans d'expériences correspondant à une pluralité d'essais empiriques propre à chaque type et géométrie de l'aliment à cuire. Autrement dit, l'algorithme de cuisson détermine une équation qui résout au mieux des constats réalisés lors des plans d'expériences.

Le procédé selon l'invention permet d'améliorer la caractérisation de l'aliment à cuire en déterminant notamment son type et sa géométrie dimensionnelle, de sorte à déterminer précisément le plan de cuisson à partir de cette caractérisation. En effet, il est démontré que l'épaisseur de l'aliment à cuire est prépondérante dans la détermination de la durée de cuisson. Par ailleurs, lors d'une utilisation d'un appareil de cuisson muni d'une plaque de cuisson à faible inertie thermique, la température de la plaque de cuisson chute au contact de l'aliment à cuire. Ainsi une superficie estimée lors de l'étape de caractérisation peut être exploitée pour corriger une perte de calories de la plaque de cuisson liée au contact de l'aliment à cuire.

Ainsi, l'invention permet un accompagnement personnalisé de l'utilisateur afin que celui-ci obtienne en fin de cuisson de l'aliment à cuire un résultat, c'est-à-dire le niveau de cuisson et la texture, le plus proche d'un résultat souhaité.

L'invention peut également présenter une ou plusieurs des caractéristiques suivantes prises seules ou en combinaison.

Selon un mode de réalisation, le plan de cuisson comprend les durées de cuisson pour atteindre différents niveaux de cuisson de l'aliment à cuire, notamment saignant, à point, bien cuit. Selon un mode de réalisation, l'algorithme de cuisson est déterminé, par exemple, par une loi statistique basée sur une pluralité de plans d'expériences correspondant à une pluralité d'essais empiriques propre à chaque type, géométrie et état de l'aliment à cuire.

Selon un mode de réalisation, le procédé comprend également une étape de mise sous tension du dispositif d'assistance et/ou de l'appareil de cuisson.

Selon un mode de réalisation, l'étape de détermination détermine une température de préchauffage de l'appareil de cuisson en plus de l'algorithme de cuisson.

Selon un mode de réalisation, le procédé comprend une étape de positionnement de l'aliment à cuire au contact de l'appareil de cuisson.

Le contact avec l'appareil de cuisson est réalisé lorsque l'aliment à cuire est positionné à l'intérieur de l'appareil de cuisson, comme par exemple dans un four, ou lorsque l'aliment à cuire est positionné au-dessus d'une surface chauffante comme par exemple dans un barbecue.

Selon un mode de réalisation, l'étape de caractérisation détermine la géométrie dimensionnelle de l'aliment à cuire au moyen d'un algorithme d'odométrie visuelle, ou d'un algorithme de traitement d'image permettant une reconstruction tridimensionnelle, ou d'une technologie de réalité augmentée.

L'algorithme d'odométrie s'applique au déplacement du dispositif d'assistance et est utilisée dans l'étape de caractérisation pour déterminer un lien entre la position du dispositif d'assistance lors de l'acquisition d'une image et un contenu de cette image. L'odométrie impose que le dispositif d'assistance soit déplacé entre plusieurs prises de vue. L'algorithme d'odométrie nécessite une unité de calcul spécifique qui peut être intégrée sur certains smartphones.

Les algorithmes de traitement d'image analysent des caractéristiques physiques particulières sur plusieurs images distinctes prises à des positions différentes autour de la cible. Ces images sont utilisées afin de reconstruire dans un espace tridimensionnel une représentation physique de l'aliment à cuire. Une solution repose sur le domaine technique de la photogrammétrie qui consiste à reconstruire une scène en utilisant la parallaxe obtenue entre les images acquises ayant des points de vue différents. Ainsi, la géométrie dimensionnelle de l'aliment à cuire est déterminée à l'aide d'une reconstruction tridimensionnelle ainsi que d'un référentiel de mesure disposé dans un champ de vue des images.

Ainsi, la détermination de la géométrie dimensionnelle est réalisée automatiquement.

Selon un mode de réalisation, le type de l'aliment à cuire est déterminé automatiquement à partir d'au moins une image de la pluralité d'image, ou indiqué par un utilisateur.

La détermination automatique du type de l'aliment à cuire met en oeuvre, par exemple, une solution d'intelligence artificielle de reconnaissance d'image basée sur un réseau de neurones. Ledit réseau de neurones, Deep Learning en anglais, peut être entraîné sur une base de données représentant des aliments pouvant être disposés sur l'appareil de cuisson. Le réseau de neurones mis en place est de type classifieur ayant pour caractéristiques de sortie le type de l'aliment ainsi qu'un indice de confiance variant sur une plage de 0 à 1 en valeur flottante.

De manière alternative, l'utilisateur indique directement le type de l'aliment à cuire.

Il est possible d'entrainer le réseau de neurone sur la base de cette indication mais également sur la base des images acquises lors de l'étape de caractérisation du type d'aliment à cuire est déterminé.

Il est également envisageable que le procédé ne soit pas fonctionnel lors de l'achat de l'appareil de cuisson. L'utilisateur devra alors entrainer suffisamment le réseau de neurone en indiquant le type d'aliment à cuire après chaque acquisition d'image de l'étape d'acquisition.

Selon un mode de réalisation, le plan de cuisson comprend également une température de cuisson.

Ainsi, le plan de cuisson comprend au moins une action correspondant à une cuisson effectuée à une durée et une température de cuisson déterminée. Dans ce cas, l'appareil de cuisson doit permettre un contrôle de la température de cuisson.

Selon un mode de réalisation, le procédé comprend en outre une étape d'appairage de l'appareil de cuisson et du dispositif d'assistance de sorte qu'un échange d'information bidirectionnel soit réalisé entre eux.

L'étape d'appairage permet une transmission d'information entre le dispositif d'assistance et l'appareil de cuisson. Ainsi, le plan de cuisson peut être directement transmis du dispositif d'assistance à l'appareil de cuisson sans que l'utilisateur manipule l'appareil de cuisson et l'appareil de cuisson peut informer le dispositif d'assistance de l'avancement du plan de cuisson. Selon un mode de réalisation, l'appairage est réalisé au moyen d'une technologie choisie parmi : radiofréquence, wifi ou bluetooth.

Selon une alternative, le procédé comprend une étape d'information à destination de l'utilisateur lui indiquant les paramétrages à appliquer à l'appareil de cuisson.

Selon un mode de réalisation, le procédé comprend en outre une étape de contrôle dans laquelle l'appareil de cuisson est contrôlé de sorte à appliquer le plan de cuisson.

L'étape de contrôle permet la mise en oeuvre du plan de cuisson. Elle peut être réalisée automatiquement par le dispositif d'assistance. Dans ce cas, il est nécessaire que le dispositif d'assistance et l'appareil de cuisson soit apparié. De manière alternative, l'étape de contrôle peut être réalisé par l'utilisateur. Dans ce cas, le dispositif d'assistance indique à l'utilisateur au moins la durée de cuisson à appliquer à l'aliment à cuire.

Selon un mode de réalisation, le procédé comprend en outre une étape d'affichage dans laquelle le plan de cuisson est affiché sur un écran du dispositif d'assistance.

Ainsi l'utilisateur à connaissance de l'ensemble du plan de cuisson à appliquer ou de l'action du plan de cuisson qui est en cours de réalisation.

Selon un mode de réalisation, le procédé comprend en outre une étape de sélection dans laquelle un niveau de cuisson souhaité de l'aliment à cuire est indiqué par sélection.

Selon un mode de réalisation, le procédé comprend une étape d'information dans laquelle l'appareil de cuisson émet une information à destination d'un utilisateur de sorte à lui indiquer le niveau de cuisson dans lequel se trouve l'aliment.

L'information à destination de l'utilisateur peut être visuel ou sonore.

Selon un mode de réalisation, le procédé comprend en outre une étape de choix dans laquelle une texture souhaitée de l'aliment à cuire est indiquée par sélection.

La texture souhaitée comme par exemple à une intensité de marquage aura un impact sur la température de cuisson au début de la cuisson, un niveau de cuisson aura un impact sur la durée de cuisson.

Selon un mode de réalisation, le procédé comprend en outre une étape de validation dans laquelle le type de l'aliment déterminé lors de l'étape de caractérisation est confirmé par un utilisateur.

L'invention sera mieux comprise, grâce à la description ci-après, qui se rapporte à plusieurs modes de réalisation selon la présente invention, donné à titre d'exemples non limitatifs et expliqués avec référence aux dessins schématiques annexés, dans lesquels :
[FIG. 1] est une représentation schématique d'une étape de mise sous tension d'un procédé selon l'invention ;
[FIG. 2] est une représentation schématique d'une étape d'ouverture du procédé selon l'invention ;
[FIG. 3] est une représentation schématique d'une étape d'acquisition du procédé selon l'invention.
[FIG. 4] est une représentation schématique d'une étape de sélection du procédé selon l'invention.
[FIG. 5] est une représentation schématique d'une étape de contrôle selon un premier mode de réalisation du procédé selon l'invention.
[FIG. 6] est une représentation schématique de l'étape de contrôle selon un second mode de réalisation du procédé selon l'invention.
[FIG. 7] est une représentation schématique d'une étape d'information et d'une étape de positionnement du procédé selon l'invention.
[FIG. 8] est une représentation schématique de l'étape d'affichage du procédé selon l'invention.

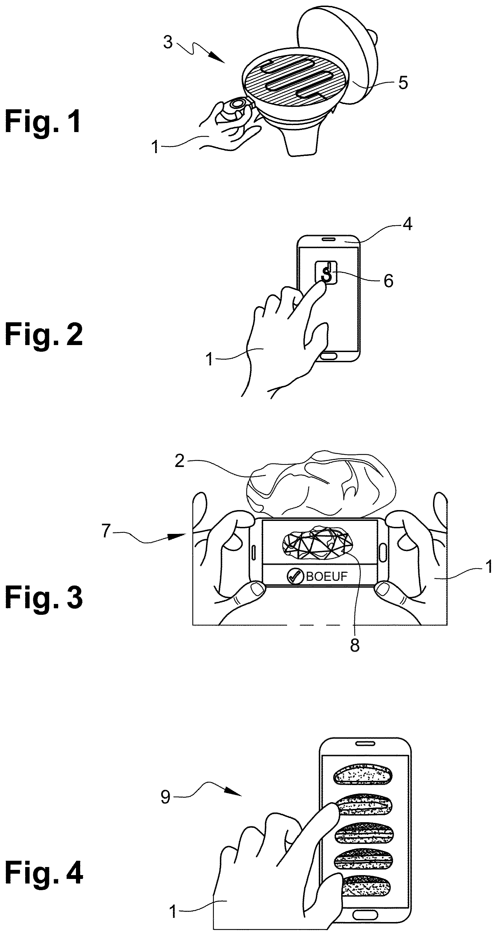

Les figures 1 à 8 illustrent différentes étapes du procédé de détermination selon l'invention. Ce dernier permet un accompagnement personnalisé d'un utilisateur 1 afin que celui-ci obtienne à la fin d'une cuisson d'un aliment à cuire 2 un résultat, c'est-à-dire un niveau de cuisson et une texture, proche d'un résultat souhaité. Le procédé de détermination comprend une série d'étape qui sont réalisées pour certaines par l'utilisateur et pour d'autres automatiquement.

Plus précisément, le procédé comprend une étape de mise sous tension 3 par l'utilisateur 1 du dispositif d'assistance 4 et de l'appareil de cuisson 5 telle qu'illustrée en figure 1. Lors de cette étape, le dispositif de cuisson 5, qui est par exemple un barbecue électrique, est allumé ainsi que le dispositif d'assistance 4, qui est par exemple un smartphone. Le dispositif de cuisson 5 doit permettre de régler une température de cuisson.

Ensuite, l'utilisateur 1 réalise l'étape d'ouverture en ouvrant une application 6 dédiée au procédé selon l'invention, telle qu'illustrée en figure 2. L'application 6 est installée sur le dispositif d'assistance 4 de l'utilisateur 1. L'application 6 guide l'utilisateur à travers une interface afin de réaliser le procédé selon l'invention. Notamment, l'utilisateur 1 indique avec quel appareil de cuisson sera réalisée la cuisson de l'aliment à cuire 2. En effet, une même application peut être utilisé par plusieurs appareil de cuisson.

L'interface invite l'utilisateur 1 à réaliser, avec un capteur de prise d'image du dispositif d'assistance 4, une étape d'acquisition 7 dans laquelle une pluralité d'images 8 de l'aliment à cuire 2 sont réalisées. Cette étape est illustrée en figure 3. Entre chaque image, le dispositif d'assistance 4 est déplacé de sorte à obtenir une succession d'images 8 selon une pluralité d'angles de prises de vue. Cette succession d'image, selon la fréquence d'acquisition peut s'apparenter à une vidéo. Les images 8 sont enregistrées sur une mémoire tampon du dispositif d'assistance.

Ensuite, le dispositif d'assistance 4 effectue une étape de caractérisation dans laquelle les images 8 sont traitées par des algorithmes permettant de déterminer un type d'aliment à cuire 2, dans le cas représenté il s'agit d'une côte de boeuf, et une géométrie dimensionnelle de l'aliment à cuire 2. Plus précisément, l'étape de caractérisation détermine automatiquement la géométrie dimensionnelle de l'aliment à cuire 2 au moyen d'un algorithme d'odométrie visuelle, ou d'un algorithme de traitement d'image permettant une reconstruction tridimensionnelle, ou d'une technologie de réalité augmentée. Le type de l'aliment à cuire 2 est quant à lui indiqué par l'utilisateur 1 ou déterminé automatiquement à partir d'une des images 8 enregistrées. Dans ce dernier cas, le procédé selon l'invention met en oeuvre une solution d'intelligence artificielle qui indique le type de l'aliment à cuire 2 ainsi d'un indice de confiance variant sur une plage de 0 à 1 en valeur flottante. Il est alors possible, mais non obligatoire, que l'utilisateur 1 effectue une étape de validation. Dans cette étape, l'interface invite l'utilisateur à confirmer le type de l'aliment à cuire 2 qui a été déterminé automatiquement.

L'interface invite également l'utilisateur 1 à réaliser une étape de sélection 9 telle que représentée en figure 4, dans laquelle un niveau de cuisson souhaité de l'aliment à cuire 2 est indiqué par sélection par l'utilisateur 1.

L'utilisateur 1 peut aussi réaliser une étape de choix dans laquelle il indique par sélection une texture souhaitée de l'aliment à cuire 2.

Les étapes de sélection 9 et de choix sont optionnelles dans le procédé de l'invention et peuvent être effectuées avant ou après les étapes d'acquisition 7 et de caractérisation.

Avec l'ensemble des informations sur le type et la géométrie dimensionnelle de l'aliment à cuire 2, ainsi que le niveau de cuisson et la texture souhaitée, le dispositif d'assistance 4 effectue une étape de détermination. Dans cette étape, un algorithme de cuisson prédéterminé détermine un plan de cuisson comprenant une durée de cuisson et une température de cuisson. Autrement dit, le plan de cuisson liste des actions à faire pour atteindre le résultat de cuisson souhaité. Une action peut par exemple être : préchauffer pendant 15min à 200°C, positionner l'aliment à cuire dans le dispositif de cuisson, cuire pendant 30min à 180°C ou retourner l'aliment à cuire. L'utilisateur 1 doit suivre les actions du plan de cuisson pour atteindre le résultat souhaité. Il s'agit d'une étape de contrôle 10, 10'.

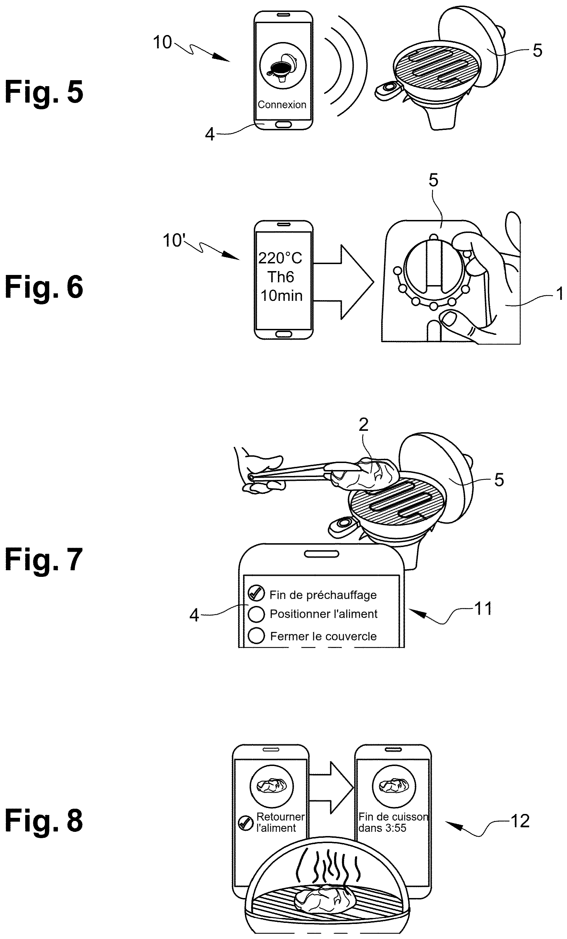

Dans un premier mode de réalisation illustré en figure 5, l'étape de contrôle 10 est faite directement par le dispositif d'assistance 4. Pour cela, le procédé réalise, préalablement, une étape d'appairage du dispositif d'assistance 4 et de l'appareil de cuisson 5. Lors de cette étape d'appairage, un échange d'information bidirectionnel est réalisé entre le dispositif d'assistance 4 et l'appareil de cuisson 5. Ainsi le dispositif d'assistance 4 indique directement à l'appareil de cuisson 5 la température et la durée de cuisson.

De manière alternative, dans un second mode de réalisation de l'étape de contrôle 10' illustré en figure 6, l'utilisateur 1 indique manuellement sur l'appareil de cuisson 5 la température de cuisson et optionnellement la durée de cuisson.

Lors d'une étape de positionnement, l'utilisateur 1 positionne l'aliment à cuire 2 au contact de l'appareil de cuisson 5 tel qu'illustré en figure 7.

Le procédé comprend également une étape d'information 11 dans laquelle l'appareil de cuisson 5 émet une information à destination de l'utilisateur 1 via le dispositif d'assistance 4 de sorte à indiquer le niveau de cuisson dans lequel se trouve l'aliment 2 et les étapes restantes.

Le procédé comprend une étape d'affichage 12 qui a pour objet d'afficher le plan de cuisson sur un écran du dispositif d'assistance 4. Ainsi l'utilisateur 1 peut facilement suivre la cuisson en cours.

En mettant en oeuvre le procédé selon l'invention, l'utilisateur obtient facilement le résultat recherché.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de détermination d'un plan de cuisson pour un appareil de cuisson (5), comprenant :
- Une étape d'acquisition (7) dans laquelle une pluralité d'images (8) d'un aliment à cuire (2) sont réalisées sous une pluralité d'angles de prises de vue au moyen d'un dispositif d'assistance (4), ledit dispositif d'assistance (4) comprenant au moins un capteur de prise d'image;
- Une étape de caractérisation dans laquelle un type d'aliment à cuire (2) est déterminé ;
**caractérisé en ce que** l'étape de caractérisation détermine automatiquement à partir de la pluralité d'image (8) une géométrie dimensionnelle de l'aliment à cuire (2) et **en ce que** le procédé comprend en outre une étape de détermination dans laquelle un algorithme de cuisson prédéterminé détermine un plan de cuisson comprenant au moins une durée de cuisson à partir du type et de la géométrie dimensionnelle de l'aliment à cuire déterminés au cours de l'étape de caractérisation.

2. Procédé de détermination selon la revendication 1, dans lequel l'étape de caractérisation détermine la géométrie dimensionnelle de l'aliment à cuire (2) au moyen d'un algorithme d'odométrie visuelle, ou d'un algorithme de traitement d'image permettant une reconstruction tridimensionnelle, ou d'une technologie de réalité augmentée.

3. Procédé de détermination selon l'une quelconque des revendications 1 ou 2, dans lequel le type de l'aliment à cuire (2) est déterminé automatiquement à partir d'au moins une image de la pluralité d'image (8), ou indiqué par un utilisateur (1).

4. Procédé de détermination selon l'une quelconque des revendications précédentes, dans lequel le plan de cuisson comprend également une température de cuisson.

5. Procédé de détermination selon l'une quelconque des revendications précédentes, comprenant en outre une étape d'appairage de l'appareil de cuisson (5) et du dispositif d'assistance (4) de sorte qu'un échange d'information bidirectionnel soit réalisé entre eux.

6. Procédé de détermination selon l'une quelconque des revendications précédentes, comprenant en outre une étape de contrôle (10, 10') dans laquelle l'appareil de cuisson (5) est contrôlé de sorte à appliquer le plan de cuisson.

7. Procédé de détermination selon l'une quelconque des revendications précédentes, comprenant en outre une étape d'affichage (12) dans laquelle le plan de cuisson est affiché sur un écran du dispositif d'assistance (4).

8. Procédé de détermination selon l'une quelconque des revendications précédentes, comprenant en outre une étape de sélection (9) dans laquelle un niveau de cuisson souhaité de l'aliment à cuire (2) est indiqué par sélection.

9. Procédé de détermination selon l'une quelconque des revendications précédentes, comprenant une étape d'information (11) dans laquelle l'appareil de cuisson (5) émet une information à destination d'un utilisateur (1) de sorte à lui indiquer le niveau de cuisson dans lequel se trouve l'aliment.

10. Procédé de détermination selon l'une quelconque des revendications précédentes, comprenant en outre une étape de choix dans laquelle une texture souhaitée de l'aliment à cuire (2) est indiquée par sélection.

11. Procédé de détermination selon l'une quelconque des revendications précédentes, comprenant en outre une étape de validation dans laquelle le type de l'aliment déterminé lors de l'étape de caractérisation est confirmée par un utilisateur.
